# EUROPEAN PATENT SPECIFICATION

(11) **EP 4 329 416 B1**
(45) Date of publication and mention of the grant of the patent: **04.06.2025**
(21) Application number: 22192329.5
(22) Date of filing: 26.08.2022
(51) Int. Cl.: H04W 76/14, H04L 5/00, H04W 92/08

(54) **CARRYING OUT WIRELESS DEVICE-TO-DEVICE COMMUNICATION**
AUSÜBUNG DRAHTLOSER GERÄTE-ZU-GERÄTE KOMMUNIKATION
COMMUNICATION ENTRE APPAREILS SANS FIL

(43) Date of publication of application: 28.02.2024
(73) Proprietor: Nokia Technologies Oy, 02610 Espoo (FI)
(72) Inventor: YU, Ling, 02700 Kauniainen (FI); VAN PHAN, Vinh, 90100 Oulu (FI); SABOURI-SICHANI, Faranaz, 9220 Aalborg (DK); CHRISTENSEN, Lars Holst, 9000 Aalborg (DK); WILDSCHEK, Torsten, Gloucester, GL4 5TW (GB); LINDHOLM, Jari Olavi, 01940 Palojoki (FI); PANZNER, Berthold, 83607 Holzkirchen (DE)
(74) Representative: Page White Farrer

(56) References cited:
- WO-A1-2019/061194

## Description

### Field of the disclosure

The present disclosure relates to an apparatus, a method, and a computer program for determining a sidelink carrier aggregation capability of a user equipment on a group of carriers.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

WO2019/061194A1 (ZTE CORP [CN] 4 April 2019 is related prior art.

### Summary

There is provided an apparatus (falling within the scope of the claims) comprising: means for sending a duplicate sidelink transmission to a user equipment on each carrier of a group of carriers; means for receiving feedback from the user equipment for each carrier; and means for determining a sidelink carrier aggregation capability of the user equipment on the group of carriers based on the feedback.

The apparatus may comprise: means for sending a duplicate sidelink transmission to a group of user equipment on each carrier of a group of carriers; means for receiving feedback from each user equipment of the group of user equipment for each carrier of the group of carriers; and means for determining a sidelink carrier aggregation capability of each user equipment of the group of user equipment on the group of carriers based on the feedback.

The feedback from the user equipment or each user equipment of the group of user equipment for each carrier of the group of carriers may comprise: an acknowledgement transmission when the user equipment successfully decodes a sidelink control information and successfully decodes a data payload on the carrier; a negative acknowledgement transmission when the user equipment successfully decodes a sidelink control information and does not successfully decode a data payload on the carrier; or a discontinuous transmission when the user equipment does not successfully decode the sidelink control information on the carrier.

The apparatus may comprise: means for determining that a user equipment of the group of user equipment has a sidelink carrier aggregation capability on the group of carriers when the feedback for each carrier comprises an acknowledgement transmission or a negative acknowledgement transmission; or means for determining that a user equipment of the group of user equipment does not have a sidelink carrier aggregation capability on the group of carriers, when the feedback for at least one carrier comprises a discontinuous transmission.

Sending a duplicate sidelink transmission to each user equipment of the group of user equipment on each carrier of a group of carriers may be in response to at least one of: removing and/or adding a user equipment to the group of user equipment; removing and/or adding a carrier to the group of carriers; detecting a number of consecutive discontinuous transmissions from a user equipment of the group of user equipment on a carrier of the group of carriers being greater than a threshold number of consecutive discontinuous transmissions; and/or detecting an expiration of a timer.

The threshold number of consecutive discontinuous transmissions may be based on at least one of: a transmission power of the duplicate sidelink transmission; a range of sidelink transmission; a link adaptation target; and/or a modulation and coding scheme.

The duplicate sidelink transmission may comprise: sidelink carrier aggregation capability detection information; and/or data payload.

The sidelink carrier aggregation capability detection information may comprise: an indication of a list of the group of carriers; an indication of a primary carrier within the group of carriers; and/or an indication of a secondary carrier within the group of carriers.

The sidelink carrier aggregation capability detection information may be conveyed within sidelink control information and/or within a medium access control control element.

Sending a duplicated sidelink transmission to each user equipment of the group of user equipment on each carrier of the group of carriers may comprise: simultaneously sending a duplicate sidelink transmission to each user equipment of the group of user equipment on a carrier of the group of carriers and sending a duplicate sidelink transmission to each user equipment of the group of user equipment on another carrier of the group of carriers; or sequentially sending a duplicate sidelink transmission to each user equipment of the group of user equipment on a carrier of the group of carriers and sending a duplicate sidelink transmission to each user equipment of the group of user equipment on another carrier of the group of carriers.

The apparatus may comprise: means for determining that a number of user equipment of the group of user equipment without sidelink carrier aggregation capability on the group of carriers is above a threshold number of user equipment.

The threshold number of user equipment may be one or more than one.

The apparatus may comprise at least one of: means for abstaining from using sidelink carrier aggregation on the group of carriers for sending a subsequent sidelink transmission to the group of user equipment; means for using sidelink carrier aggregation on the group of carriers for sending a subsequent sidelink transmission to the group of user equipment, wherein the subsequent sidelink transmission comprises a duplicate sidelink transmission; and/or means for resending a duplicate sidelink transmission to the group user equipment on each carrier of a different group of carriers.

The apparatus may comprise: means for determining that all user equipment of the group of user equipment have a sidelink carrier aggregation capability on the group of carriers.

The apparatus may comprise: means for using sidelink carrier aggregation on the group of carriers for sending a subsequent sidelink transmission to the group of user equipment.

The subsequent sidelink transmission may comprise a duplicate sidelink transmission and/or a split sidelink transmission.

The group of carriers may comprise: all carriers supported by the apparatus; or part of the carriers supported by the apparatus and selected for carrier aggregation.

The apparatus may comprise: means for sending the duplicate sidelink transmission to each user equipment of the group of user equipment on each carrier of the group of carriers before enabling carrier aggregation on the group of carriers or after enabling carrier aggregation on the group of carriers.

There is provided an apparatus (falling within the scope of the claims) comprising at least one processor and at least one memory storing instructions that, when executed by the at least one processor, to cause the apparatus at least to: send a duplicate sidelink transmission to a user equipment on each carrier of a group of carriers; receive feedback from the user equipment for each carrier; and determine a sidelink carrier aggregation capability of the user equipment on the group of carriers based on the feedback.

The at least one processor and at least one memory may store instructions that, when executed by the at least one processor, cause the apparatus at least to: send a duplicate sidelink transmission to a group of user equipment on each carrier of a group of carriers; receive feedback from each user equipment of the group of user equipment for each carrier of the group of carriers; and determine a sidelink carrier aggregation capability of each user equipment of the group of user equipment on the group of carriers based on the feedback.

The feedback from the user equipment or each user equipment of the group of user equipment for each carrier of the group of carriers may comprise: an acknowledgement transmission when the user equipment successfully decodes a sidelink control information and successfully decodes a data payload on the carrier; a negative acknowledgement transmission when the user equipment successfully decodes a sidelink control information and does not successfully decode a data payload on the carrier; or a discontinuous transmission when the user equipment does not successfully decode the sidelink control information on the carrier.

The at least one processor and at least one memory may store instructions that, when executed by the at least one processor, cause the apparatus at least to: determine that a user equipment of the group of user equipment has a sidelink carrier aggregation capability on the group of carriers when the feedback for each carrier comprises an acknowledgement transmission or a negative acknowledgement transmission; or determine that a user equipment of the group of user equipment does not have a sidelink carrier aggregation capability on the group of carriers, when the feedback for at least one carrier comprises a discontinuous transmission.

Sending a duplicate sidelink transmission to each user equipment of the group of user equipment on each carrier of a group of carriers may be in response to at least one of: removing and/or adding a user equipment to the group of user equipment; removing and/or adding a carrier to the group of carriers; detecting a number of consecutive discontinuous transmissions from a user equipment of the group of user equipment on a carrier of the group of carriers being greater than a threshold number of consecutive discontinuous transmissions; and/or detecting an expiration of a timer.

The threshold number of consecutive discontinuous transmissions may be based on at least one of: a transmission power of the duplicate sidelink transmission; a range of sidelink transmission; a link adaptation target; and/or a modulation and coding scheme.

The duplicate sidelink transmission may comprise: sidelink carrier aggregation capability detection information; and/or data payload.

The sidelink carrier aggregation capability detection information may comprise: an indication of a list of the group of carriers; an indication of a primary carrier within the group of carriers; and/or an indication of a secondary carrier within the group of carriers.

The sidelink carrier aggregation capability detection information may be conveyed within sidelink control information and/or within a medium access control control element.

Sending a duplicated sidelink transmission to each user equipment of the group of user equipment on each carrier of the group of carriers may comprise: simultaneously sending a duplicate sidelink transmission to each user equipment of the group of user equipment on a carrier of the group of carriers and sending a duplicate sidelink transmission to each user equipment of the group of user equipment on another carrier of the group of carriers; or sequentially sending a duplicate sidelink transmission to each user equipment of the group of user equipment on a carrier of the group of carriers and sending a duplicate sidelink transmission to each user equipment of the group of user equipment on another carrier of the group of carriers.

The at least one processor and at least one memory may store instructions that, when executed by the at least one processor, cause the apparatus at least to: determine that a number of user equipment of the group of user equipment without sidelink carrier aggregation capability on the group of carriers is above a threshold number of user equipment.

The threshold number of user equipment may be one or more than one.

The at least one processor and at least one memory may store instructions that, when executed by the at least one processor, cause the apparatus to at least one of: abstain from using sidelink carrier aggregation on the group of carriers for sending a subsequent sidelink transmission to the group of user equipment; use sidelink carrier aggregation on the group of carriers for sending a subsequent sidelink transmission to the group of user equipment, wherein the subsequent sidelink transmission comprises a duplicate sidelink transmission; and/or resend a duplicate sidelink transmission to the group user equipment on each carrier of a different group of carriers.

The at least one processor and at least one memory may store instructions that, when executed by the at least one processor, cause the apparatus at least to: determine that all user equipment of the group of user equipment have a sidelink carrier aggregation capability on the group of carriers.

The at least one processor and at least one memory may store instructions that, when executed by the at least one processor, cause the apparatus at least to: use sidelink carrier aggregation on the group of carriers for sending a subsequent sidelink transmission to the group of user equipment.

The subsequent sidelink transmission may comprise a duplicate sidelink transmission and/or a split sidelink transmission.

The group of carriers may comprise: all carriers supported by the apparatus; or part of the carriers supported by the apparatus and selected for carrier aggregation.

The at least one processor and at least one memory may store instructions that, when executed by the at least one processor, cause the apparatus at least to: send the duplicate sidelink transmission to each user equipment of the group of user equipment on each carrier of the group of carriers before enabling carrier aggregation on the group of carriers or after enabling carrier aggregation on the group of carriers.

There is provided an apparatus (falling within the scope of the claims) comprising circuitry configured to: send a duplicate sidelink transmission to a user equipment on each carrier of a group of carriers; receive feedback from the user equipment for each carrier; and determine a sidelink carrier aggregation capability of the user equipment on the group of carriers based on the feedback.

The circuitry may be configured to: send a duplicate sidelink transmission to a group of user equipment on each carrier of a group of carriers; receive feedback from each user equipment of the group of user equipment for each carrier of the group of carriers; and determine a sidelink carrier aggregation capability of each user equipment of the group of user equipment on the group of carriers based on the feedback.

The feedback from the user equipment or each user equipment of the group of user equipment for each carrier of the group of carriers may comprise: an acknowledgement transmission when the user equipment successfully decodes a sidelink control information and successfully decodes a data payload on the carrier; a negative acknowledgement transmission when the user equipment successfully decodes a sidelink control information and does not successfully decode a data payload on the carrier; or a discontinuous transmission when the user equipment does not successfully decode the sidelink control information on the carrier.

The circuitry may be configured to: determine that a user equipment of the group of user equipment has a sidelink carrier aggregation capability on the group of carriers when the feedback for each carrier comprises an acknowledgement transmission or a negative acknowledgement transmission; or determine that a user equipment of the group of user equipment does not have a sidelink carrier aggregation capability on the group of carriers, when the feedback for at least one carrier comprises a discontinuous transmission.

Sending a duplicate sidelink transmission to each user equipment of the group of user equipment on each carrier of a group of carriers may be in response to at least one of: removing and/or adding a user equipment to the group of user equipment; removing and/or adding a carrier to the group of carriers; detecting a number of consecutive discontinuous transmissions from a user equipment of the group of user equipment on a carrier of the group of carriers being greater than a threshold number of consecutive discontinuous transmissions; and/or detecting an expiration of a timer.

The threshold number of consecutive discontinuous transmissions may be based on at least one of: a transmission power of the duplicate sidelink transmission; a range of sidelink transmission; a link adaptation target; and/or a modulation and coding scheme.

The duplicate sidelink transmission may comprise: sidelink carrier aggregation capability detection information; and/or data payload.

The sidelink carrier aggregation capability detection information may comprise: an indication of a list of the group of carriers; an indication of a primary carrier within the group of carriers; and/or an indication of a secondary carrier within the group of carriers.

The sidelink carrier aggregation capability detection information may be conveyed within sidelink control information and/or within a medium access control control element.

Sending a duplicated sidelink transmission to each user equipment of the group of user equipment on each carrier of the group of carriers may comprise: simultaneously sending a duplicate sidelink transmission to each user equipment of the group of user equipment on a carrier of the group of carriers and sending a duplicate sidelink transmission to each user equipment of the group of user equipment on another carrier of the group of carriers; or sequentially sending a duplicate sidelink transmission to each user equipment of the group of user equipment on a carrier of the group of carriers and sending a duplicate sidelink transmission to each user equipment of the group of user equipment on another carrier of the group of carriers.

The circuitry may be configured to: determine that a number of user equipment of the group of user equipment without sidelink carrier aggregation capability on the group of carriers is above a threshold number of user equipment.

The threshold number of user equipment may be one or more than one.

The circuitry may be configured to at least one of: abstain from using sidelink carrier aggregation on the group of carriers for sending a subsequent sidelink transmission to the group of user equipment; use sidelink carrier aggregation on the group of carriers for sending a subsequent sidelink transmission to the group of user equipment, wherein the subsequent sidelink transmission comprises a duplicate sidelink transmission; and/or resend a duplicate sidelink transmission to the group user equipment on each carrier of a different group of carriers.

The circuitry may be configured to: determine that all user equipment of the group of user equipment have a sidelink carrier aggregation capability on the group of carriers.

The circuitry may be configured to: use sidelink carrier aggregation on the group of carriers for sending a subsequent sidelink transmission to the group of user equipment.

The subsequent sidelink transmission may comprise a duplicate sidelink transmission and/or a split sidelink transmission.

The group of carriers may comprise: all carriers supported by the apparatus; or part of the carriers supported by the apparatus and selected for carrier aggregation.

The circuitry may be configured to: send the duplicate sidelink transmission to each user equipment of the group of user equipment on each carrier of the group of carriers before enabling carrier aggregation on the group of carriers or after enabling carrier aggregation on the group of carriers.

There is provided a method (falling within the scope of the claims) comprising: sending a duplicate sidelink transmission to a user equipment on each carrier of a group of carriers; receiving feedback from the user equipment for each carrier; and determining a sidelink carrier aggregation capability of the user equipment on the group of carriers based on the feedback.

The method may comprise: sending a duplicate sidelink transmission to a group of user equipment on each carrier of a group of carriers; receiving feedback from each user equipment of the group of user equipment for each carrier of the group of carriers; and determining a sidelink carrier aggregation capability of each user equipment of the group of user equipment on the group of carriers based on the feedback.

The feedback from the user equipment or each user equipment of the group of user equipment for each carrier of the group of carriers may comprise: an acknowledgement transmission when the user equipment successfully decodes a sidelink control information and successfully decodes a data payload on the carrier; a negative acknowledgement transmission when the user equipment successfully decodes a sidelink control information and does not successfully decode a data payload on the carrier; or a discontinuous transmission when the user equipment does not successfully decode the sidelink control information on the carrier.

The method may comprise: determining that a user equipment of the group of user equipment has a sidelink carrier aggregation capability on the group of carriers when the feedback for each carrier comprises an acknowledgement transmission or a negative acknowledgement transmission; or determining that a user equipment of the group of user equipment does not have a sidelink carrier aggregation capability on the group of carriers, when the feedback for at least one carrier comprises a discontinuous transmission.

Sending a duplicate sidelink transmission to each user equipment of the group of user equipment on each carrier of a group of carriers may be in response to at least one of: removing and/or adding a user equipment to the group of user equipment; removing and/or adding a carrier to the group of carriers; detecting a number of consecutive discontinuous transmissions from a user equipment of the group of user equipment on a carrier of the group of carriers being greater than a threshold number of consecutive discontinuous transmissions; and/or detecting an expiration of a timer.

The threshold number of consecutive discontinuous transmissions may be based on at least one of: a transmission power of the duplicate sidelink transmission; a range of sidelink transmission; a link adaptation target; and/or a modulation and coding scheme.

The duplicate sidelink transmission may comprise: sidelink carrier aggregation capability detection information; and/or data payload.

The sidelink carrier aggregation capability detection information may comprise: an indication of a list of the group of carriers; an indication of a primary carrier within the group of carriers; and/or an indication of a secondary carrier within the group of carriers.

The sidelink carrier aggregation capability detection information may be conveyed within sidelink control information and/or within a medium access control control element.

Sending a duplicated sidelink transmission to each user equipment of the group of user equipment on each carrier of the group of carriers may comprise: simultaneously sending a duplicate sidelink transmission to each user equipment of the group of user equipment on a carrier of the group of carriers and sending a duplicate sidelink transmission to each user equipment of the group of user equipment on another carrier of the group of carriers; or sequentially sending a duplicate sidelink transmission to each user equipment of the group of user equipment on a carrier of the group of carriers and sending a duplicate sidelink transmission to each user equipment of the group of user equipment on another carrier of the group of carriers.

The method may comprise: determining that a number of user equipment of the group of user equipment without sidelink carrier aggregation capability on the group of carriers is above a threshold number of user equipment.

The threshold number of user equipment may be one or more than one.

The method may comprise at least one of: abstaining from using sidelink carrier aggregation on the group of carriers for sending a subsequent sidelink transmission to the group of user equipment; using sidelink carrier aggregation on the group of carriers for sending a subsequent sidelink transmission to the group of user equipment, wherein the subsequent sidelink transmission comprises a duplicate sidelink transmission; and/or resending a duplicate sidelink transmission to the group user equipment on each carrier of a different group of carriers.

The method may comprise: determining that all user equipment of the group of user equipment have a sidelink carrier aggregation capability on the group of carriers.

The method may comprise: using sidelink carrier aggregation on the group of carriers for sending a subsequent sidelink transmission to the group of user equipment.

The subsequent sidelink transmission may comprise a duplicate sidelink transmission and/or a split sidelink transmission.

The group of carriers may comprise: all carriers supported by the apparatus; or part of the carriers supported by the apparatus and selected for carrier aggregation.

The method may comprise: sending the duplicate sidelink transmission to each user equipment of the group of user equipment on each carrier of the group of carriers before enabling carrier aggregation on the group of carriers or after enabling carrier aggregation on the group of carriers.

There is provided a computer program (falling outside the scope of the claims) comprising computer executable code which when run on at least one processor is configured to: send a duplicate sidelink transmission to a user equipment on each carrier of a group of carriers; receive feedback from the user equipment for each carrier; and determine a sidelink carrier aggregation capability of the user equipment on the group of carriers based on the feedback.

The computer program may comprise computer executable code which when run on at least one processor is configured to: send a duplicate sidelink transmission to a group of user equipment on each carrier of a group of carriers; receive feedback from each user equipment of the group of user equipment for each carrier of the group of carriers; and determine a sidelink carrier aggregation capability of each user equipment of the group of user equipment on the group of carriers based on the feedback.

The feedback from the user equipment or each user equipment of the group of user equipment for each carrier of the group of carriers may comprise: an acknowledgement transmission when the user equipment successfully decodes a sidelink control information and successfully decodes a data payload on the carrier; a negative acknowledgement transmission when the user equipment successfully decodes a sidelink control information and does not successfully decode a data payload on the carrier; or a discontinuous transmission when the user equipment does not successfully decode the sidelink control information on the carrier.

The computer program may comprise computer executable code which when run on at least one processor is configured to: determine that a user equipment of the group of user equipment has a sidelink carrier aggregation capability on the group of carriers when the feedback for each carrier comprises an acknowledgement transmission or a negative acknowledgement transmission; or determine that a user equipment of the group of user equipment does not have a sidelink carrier aggregation capability on the group of carriers, when the feedback for at least one carrier comprises a discontinuous transmission.

Sending a duplicate sidelink transmission to each user equipment of the group of user equipment on each carrier of a group of carriers may be in response to at least one of: removing and/or adding a user equipment to the group of user equipment; removing and/or adding a carrier to the group of carriers; detecting a number of consecutive discontinuous transmissions from a user equipment of the group of user equipment on a carrier of the group of carriers being greater than a threshold number of consecutive discontinuous transmissions; and/or detecting an expiration of a timer.

The threshold number of consecutive discontinuous transmissions may be based on at least one of: a transmission power of the duplicate sidelink transmission; a range of sidelink transmission; a link adaptation target; and/or a modulation and coding scheme.

The duplicate sidelink transmission may comprise: sidelink carrier aggregation capability detection information; and/or data payload.

The sidelink carrier aggregation capability detection information may comprise: an indication of a list of the group of carriers; an indication of a primary carrier within the group of carriers; and/or an indication of a secondary carrier within the group of carriers.

The sidelink carrier aggregation capability detection information may be conveyed within sidelink control information and/or within a medium access control control element.

Sending a duplicated sidelink transmission to each user equipment of the group of user equipment on each carrier of the group of carriers may comprise: simultaneously sending a duplicate sidelink transmission to each user equipment of the group of user equipment on a carrier of the group of carriers and sending a duplicate sidelink transmission to each user equipment of the group of user equipment on another carrier of the group of carriers; or sequentially sending a duplicate sidelink transmission to each user equipment of the group of user equipment on a carrier of the group of carriers and sending a duplicate sidelink transmission to each user equipment of the group of user equipment on another carrier of the group of carriers.

The computer program may comprise computer executable code which when run on at least one processor is configured to: determine that a number of user equipment of the group of user equipment without sidelink carrier aggregation capability on the group of carriers is above a threshold number of user equipment.

The threshold number of user equipment may be one or more than one.

The computer program may comprise computer executable code which when run on at least one processor is configured to at least one of: abstain from using sidelink carrier aggregation on the group of carriers for sending a subsequent sidelink transmission to the group of user equipment; use sidelink carrier aggregation on the group of carriers for sending a subsequent sidelink transmission to the group of user equipment, wherein the subsequent sidelink transmission comprises a duplicate sidelink transmission; and/or resend a duplicate sidelink transmission to the group user equipment on each carrier of a different group of carriers.

The computer program may comprise computer executable code which when run on at least one processor is configured to: determine that all user equipment of the group of user equipment have a sidelink carrier aggregation capability on the group of carriers.

The computer program may comprise computer executable code which when run on at least one processor is configured to: use sidelink carrier aggregation on the group of carriers for sending a subsequent sidelink transmission to the group of user equipment.

The subsequent sidelink transmission may comprise a duplicate sidelink transmission and/or a split sidelink transmission.

The group of carriers may comprise: all carriers supported by the apparatus; or part of the carriers supported by the apparatus and selected for carrier aggregation.

The computer program may comprise computer executable code which when run on at least one processor is configured to: send the duplicate sidelink transmission to each user equipment of the group of user equipment on each carrier of the group of carriers before enabling carrier aggregation on the group of carriers or after enabling carrier aggregation on the group of carriers.

There is provided a computer readable medium (falling outside the scope of the claims) comprising program instructions stored thereon for performing at least one of the above methods.

According to an aspect, there is provided a non-transitory computer readable medium (falling outside the scope of the claims) comprising program instructions stored thereon for performing at least one of the above methods.

According to an aspect, there is provided a non-volatile tangible memory medium (falling outside the scope of the claims) comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims. The invention is carried out according to the appended independent claims. Optional features of the invention are carried out according to the dependent claims.

### List of abbreviations

- ACK:: Acknowledgement
- AF:: Application Function
- AGC:: Automatic Gain Control
- AMF:: Access and Mobility Management Function
- API:: Application Programming Interface
- BS:: Base Station
- CA:: Carrier Aggregation
- CE:: Control Element
- CU:: Centralized Unit
- DL:: Downlink
- DU:: Distributed Unit
- DTX:: Discontinuons Transmission
- GC:: Groupcast
- gNB:: gNodeB
- GSM:: Global System for Mobile communication
- HARQ:: Hybrid Automatic Repeat Request
- HSS:: Home Subscriber Server
- loT:: Internet of Things
- LTE:: Long Term Evolution
- MAC:: Medium Access Control
- MS:: Mobile Station
- MTC:: Machine Type Communication
- NACK:: Negative Acknowledgement
- NEF:: Network Exposure Function
- NF:: Network Function
- NR:: New radio
- NRF:: Network Repository Function
- OFDM:: Orthogonal Frequency Division Multiplexing
- PDU:: Packet Data Unit
- PRB:: Physical Resource Block
- PSFCH:: Physical Sidelink Feedback Channel
- PSSCH:: Physical Sidelink Shared Channel
- PSCCH:: Physical Sidelink Control Channel
- RAM:: Random Access Memory
- (R)AN:: (Radio) Access Network
- ROM:: Read Only Memory
- RX:: Receiving
- SCI:: Sidelink Control Information
- SMF:: Session Management Function
- TR:: Technical Report
- TS:: Technical Specification
- TX:: Transmitting
- UE:: User Equipment
- UMTS:: Universal Mobile Telecommunication System
- V2X:: Vehicle to everything
- WI:: Work Item
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a user equipment;
Figure 4 shows a schematic representation of a sidelink slot;
Figure 5 shows a block diagram of a method (falling within the scope of the claims) for determining a sidelink carrier aggregation capability of a user equipment on a group of carriers; and
Figure 6 shows a schematic representation of a non-volatile memory medium storing instructions which when executed by a processor allow a processor to perform one or more of the steps of the method of Figure 5.

### Detailed Description of the Figures

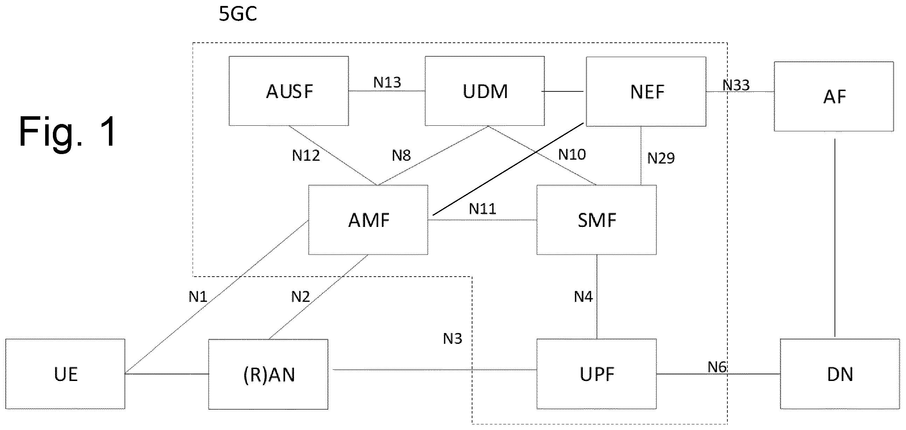

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a user equipment (UE), a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF) and/or a network exposure function (NEF).

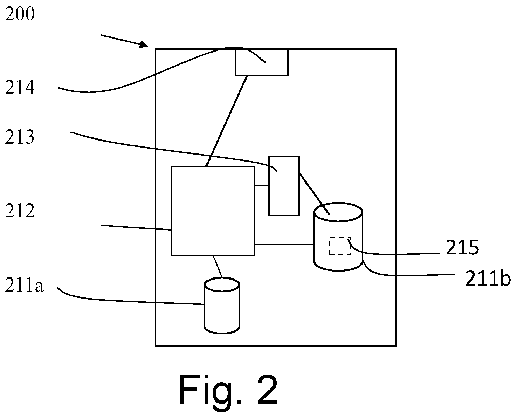

Figure 2 illustrates an example of a control apparatus 200 for controlling a function of the (R)AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

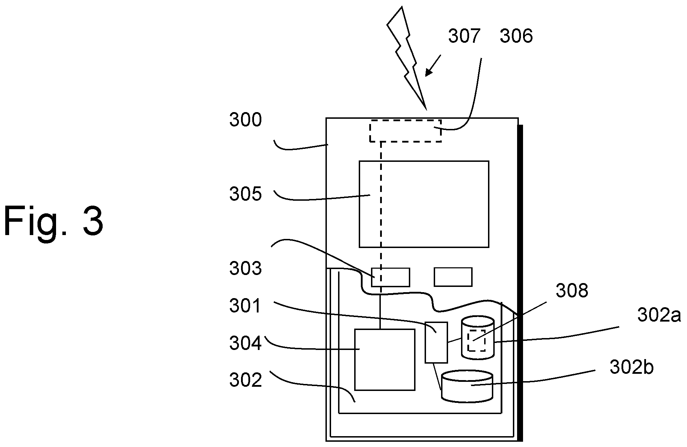

Figure 3 illustrates an example of a UE 300, such as the UE illustrated on Figure 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspects of this disclosure relate to 3GPP Rel-18 NR sidelink (SL) carrier aggregation (CA). SL CA allows UEs to send SL transmissions and/or receive SL transmissions on a group of carriers.

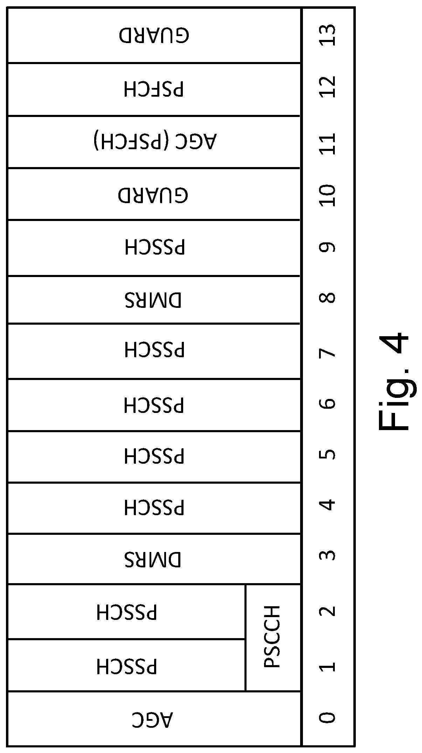

For SL communication, a transmitting (TX) UE may send a SL transmission to a receiving (RX) UE on a physical sidelink shared channel (PSSCH). If SL transmission is configured to support hybrid automatic repeat request (HARQ) feedback based retransmission, the RX UE may send a HARQ feedback to the TX UE on a physical sidelink feedback channel (PSFCH). The PSFCH was introduced for NR SL in 3GPP Rel-16 to carry HARQ acknowledgement (ACK) or non-acknowledgement (NACK) feedback. Within a PSFCH, a Zadoff-Chu sequence in one physical resource block (PRB) is repeated over one PSFCH orthogonal frequency division multiplexing (OFDM) symbol before the guard symbol of a SL slot as illustrated on Figure 4.

A SL transmission may be a unicast SL transmission (i.e. intended for a single RX UE) or a groupcast (GC) SL transmission (i.e. intended for a group of RX UEs).

For a SL GC transmission two HARQ feedback option schemes have been specified in 3GPP Rel-16.

In a first option (also known as "negative-only acknowledgement" in 3GPP TS 38.321), each RX UE of a group of RX UEs within a range of a TX UE may only send a negative-acknowledgement (NACK) transmission if the RX UE successfully decodes a sidelink control information (SCI) but fails in decoding a data payload. In the first option, each RX UE SL of the group of RX UEs may send a NACK transmission over common PSFCH resources. The common PSFCH resources may be derived from PSSCH resources.

In a second option (also known as "negative-positive acknowledgement" in 3GPP TS 38.321), each RX UE of a group of RX UEs within a range of a TX UE may send an acknowledgement (ACK) transmission if the RX UE successfully decodes a SCI and if the RX UE successfully decodes a data payload. Each RX UE of a group of RX UEs within a range of a TX UE may send a NACK if the RX UE successfully decodes the SCI but fails in decoding the data payload. Each RX UE of a group of RX UEs within a range of a TX UE may send a discontinuous transmission (DTX) (i.e. nothing is transmitted for a given time period) if the RX UE does not decode the SCI. In the second option, each RX UE of the group of RX UEs may send a ACK/NACK transmission over dedicated PSFCH resources (i.e. specific to the RX UE) that are derived from PSSCH resources and RX UE identity.

The SCI may be split into two stages. A first stage may be conveyed by a physical sidelink control channel (PSCCH). A second stage may be conveyed over a PSSCH.

As NR SL CA is a new feature introduced in 3GPP Rel-18, SL CA capability of a RX UE to receive SL communication on a group of carriers may not be assumed as a mandatory feature supported by all RX UEs. Indeed, RX UEs may comprise legacy RX UEs operating on a single carrier according to 3GPP Rel-16 and 3GPP Rel-17.

NR SL supports a SL RRC procedure only for SL unicast, i.e. between a TX UE and a single RX UE to exchange SL CA capability of the RX UE on a singlecarrier. By contrast, NR SL GC does not support a RRC procedure between TX UE and each RX UE of a group of UEs to exchange SL CA capability of the RX UE on a group of carriers. Even if a RRC procedure is introduced for NR SL GC in later releases, it may significantly increase signaling overhead as each UE of a group of UE can be a TX UE and/or a RX UE.

One RRC request for SL CA capability of each RX UE on a group of carriers from a single TX UE may cause multiple RRC response messages (i.e. a RRC response message from each RX UE) and may only allow a single TX UE to obtain SL CA capability of each RX UE on a group of carriers. Thus, using a RRC procedure may not be a sensible solution due to high signaling overhead.

One or more aspects of this disclosure provide a solution to allow a TX UE to determine SL CA capability of a RX UE on a group of carriers in a more efficient way (i.e. with reduced signaling overhead).

More specifically, one or more aspects of this disclosure provide a solution to allow a TX UE to determine SL CA capability of each RX UE of a group of UEs on a group of carriers.

In this disclosure a duplicate SL transmission on a group of carriers may refer to a SL transmission where data is duplicated and where the same data is sent on a carrier of the group of carriers and on another carrier of the group of carriers. A split SL transmission on a group of carriers may refer to a SL transmission where data is split and where a first part of the data is sent on a carrier of the group of carriers and another part of the data is sent on another carrier of the group of carriers.

In LTE SL specifications, sending a duplicate SL transmission on a group of carriers is not supported by 3GPP Rel-14 but is later supported by 3GPP Rel-15, in particular for vehicle to everything V2X service.

The problem of determining whether to send a duplicate SL transmission on a group of carriers was discussed in 3GPP Rel-15. It was specified that a TX UE may select a TX profile that defines a transmission format (i.e. 3GPP Rel-14 or 3GPP Rel-15) for a SL transmission based on a service type (see 3GPP 23.285). The service type (e.g. provider service identifier, intelligent transport systems-application identifier, application identifier) may be provided by an upper layer (e.g. application layer). The TX UE may be provided with a map associating service types and TX profiles. When the selected TX profile indicates a transmission format (i.e. 3GPP Rel-14), sending a duplicate SL transmission on a group of carriers may not be enabled. When the selected TX profile of SL communication data indicates another transmission format (i.e. 3GPP Rel-15), sending a duplicate SL transmission on a group of carriers may be enabled.

A shortcoming of the above is that the selection of the TX profile by the TX UE is static. Indeed, the map associating the service types and TX profiles is provided to the TX UE and is fixed.

Another shortcoming of the above is that the availability of a RX UE that has or has not SL CA capability on a group of carriers is not taken into consideration. Sending a duplicate SL transmission on a group of carriers to achieve high reliability or sending a split SL transmission on a group of carriers to achieve high data rate may not be enabled as long as there is potential for a RX UE operating according to 3GPP Rel-14 for the service type regardless whether the RX UE operating according to 3GPP Rel-14 is involved in the SL communication or not.

It will be understood that in some scenarios, sending a duplicate SL transmission on a group of carriers or sending a split SL transmission on a group of carriers may or may not be enabled for a RX UE having SL CA capability. For example, the RX UE having SL CA capability on the group of carriers may not be able to receive duplicated or split SL transmission on a group of carriers if it is already communicating with another TX UE on one or more carriers of the group of carriers.

In light of this, it would be advantageous if sending a duplicate SL transmission on a group of carriers or sending a split SL transmission on a group of carriers was enabled in a more dynamic manner based on a SL CA capability of a RX UE on a group of carriers rather than solely based on a service type. The SL CA capability of a RX UE on a group of carriers is determined based on real time information rather than pre-defined information.

It will be understood that although in this disclosure the expression "SL CA capability" has been used, other expressions such as "SL CA ability" may be used interchangeably. The expression "SL CA capability" may refer to the static (i.e. built-in) ability or the dynamic ability of the UE in operating or supporting SL CA.

It will be understood that although in this disclosure the term "carrier" has been used, other terms such as "frequency" or "band" may be used interchangeably.

One or more aspect of this disclosure provide a mechanism to allow a TX UE to determine a SL CA capability of a RX UE on a group of carriers based on feedback from the RX UE.

One or more aspect of this disclosure provide a mechanism to allow a TX UE to determine a SL CA capability of each RX UE of a group of UEs on a group of carriers based on feedback from each RX UE.

One or more aspect of this disclosure relate to SL GC transmission for an application layer managed group of UEs as specified in 3GPP TS23.287 and 3GPP TS23.304.

A TX UE may send a duplicate SL transmission to each RX UE of a group of UEs on each carrier of a group of carriers. The group of carriers may comprise all carriers supported by the TX UE. Alternatively, the group of carriers may comprise part of the carriers supported by the TX UE and selected for CA.

The TX UE may simultaneously send a duplicate SL transmission to each RX UE of the group of UEs on a carrier (e.g. primary carrier) of the group of carriers and send a duplicate SL transmission to each RX UE of the group of UEs on another carrier (secondary carrier) of the group of carriers. Alternatively, the TX UE may sequentially send a duplicate SL transmission to each RX UE of the group of UEs on a carrier (e.g. primary carrier) of the group of carriers and send a duplicate SL transmission to each RX UE of the group of UEs on another carrier (secondary carrier) of the group of carriers.

The TX UE may send the duplicate SL transmission to each RX UE of the group of UEs on each carrier of a group of carriers in response to a trigger.

The trigger may comprise removing and/or adding a RX UE to the group of UEs. The removing and/or adding may be caused by an upper layer (e.g. application layer). The removing and/or adding may be indicated to the TX UE by the upper layer. For example, the upper later may provide a group size and/or group member information to the TX UE to allow the TX to determine that a RX UE has been removed and/or added. This trigger may be applied before SL CA is enabled on the group of carriers (e.g. to determine SL CA capability of each RX UE of the group of UEs for current use) or after SL CA is enabled on the group of carriers by the TX UE (e.g. to determine SL CA capability of each RX UE of the group of UEs for future use).

The trigger may comprise removing and/or adding a carrier to the group of carriers (e.g. due to activation of a SL transmission and/or UL and DL transmission by the TX UE). The TX UE may then send the SL CA transmission to each RX UE of the group of UEs on each carrier of a new group of carriers. This trigger may be applied after SL CA is enabled by the TX UE on the group of carriers.

The trigger may comprise detecting a number of consecutive DTX transmissions of HARQ feedbacks from a RX UE of the group of UEs on a carrier of the group of carriers being greater than a threshold number of consecutive DTX. This may be an indication that the SL CA capability of the RX UE on the group of carriers has changed (e.g. due to activation of a SL transmission and/or UL and DL transmission by the RX UE). The TX UE may need to determine whether the RX UE has a SL CA capability on a new group of carriers. The threshold number of consecutive DTX may be based on a TX power of the duplicate SL transmission, a range of SL communication and/or the SL link adaptation target such as the determined modulation and coding scheme. This trigger may be applied after SL CA is enabled by the TX UE on the group of carriers.

The trigger may comprise detecting an expiration of a timer. This may be implemented for periodically determining whether the RX UE has a SL CA capability on the group of carriers. This allows the TX UE to detect a change of SL CA capability of a RX UE of the group of UEs or SL CA capability of a new RX UE of the group of UEs. This trigger may be applied after SL CA is enabled by the TX UE on the group of carriers.

The TX UE may send the duplicate SL transmission to each RX UE of the group of UEs on each carrier of the group of carriers before enabling SL CA on the group of carriers or after enabling SL CA on the group of carriers.

The duplicate sidelink transmission may comprise SL CA capability detection information and/or data payload. The SL CA capability detection information and the data payload may be multiplexed.

The SL CA capability detection information may comprise an indication of the group of carriers, an indication of a primary carrier within the group of carriers and/or an indication of a secondary carrier within the group of carriers.

The SL CA capability detection information may be conveyed within a SCI (e.g. second stage of SCI over PSSCH) and/or within a medium access control (MAC) control element (CE). The SCI may be used when the SL CA capability detection information and the data payload are multiplexed. Otherwise, the MAC CE or both the SCI and the MAC CE may be used.

In an implementation, if the RX UE is operating on a carrier of the group of carriers and receives SL CA capability detection information, the RX UE may be configured to operate on each carrier of the group of carriers to support SL CA on the group of carriers.

The TX UE may receive feedback (i.e. ACK, NACK or DTX) from each RX UE for each carrier. The feedback may be as per the second option (also known as "negative-positive acknowledgement" for example in TS 38.321) discussed above. Each RX UE of a group of RX UEs within a range of a TX UE may send an acknowledgement (ACK) transmission if the RX UE successfully decodes a SCI and if it successfully decodes a data payload. Each RX UE of a group of RX UEs within a range of a TX UE may send a NACK if the RX UE successfully decodes the SCI but fails in decoding the data payload. Each RX UE of a group of RX UEs within a range of a TX UE may send a discontinuous transmission (i.e. nothing) if the RX UE does not decode the SCI) In the second option, each RX UE SL of the group of RX UEs may send a NACK transmission over dedicated PSFCH resources (i.e. RX UE specific).

The TX UE may determine a SL CA capability (i.e. whether each RX UE supports SL CA on the group of carriers and, if yes, on which carriers of the group of carriers each RX UE supports SL CA) of each RX UE on the group of carriers based on the feedback. The TX UE may determine that a RX UE of the group of UEs has a SL CA capability on the group of carriers when the feedback for each carrier comprises an ACK transmission or a NACK transmission. The TX UE may determine that a RX UE of the group of UEs does not have a SL CA capability on the group of carriers when the feedback for at least one carrier of the group of carriers comprises a DTX transmission.

Alternatively, the TX UE may determine that a RX UE of the group of UEs has a SL CA capability on the group of carriers when the feedback for each carrier comprises a consecutive number of ACK transmissions or NACK transmissions greater than a threshold number of ACK transmissions or NACK transmissions. The TX UE may determine that a RX UE of the group of UEs does not have a sidelink carrier aggregation capability on the group of carriers when the feedback for at least one carrier of the group of carriers comprises a consecutive number of DTX transmissions greater than a threshold number of DTX transmissions.

The threshold number of ACK transmissions and/or NACK transmissions or thereshold number of DTX transmissions may depend on a transmission power of the duplicate SL transmission sent by the TX UE, a range of SL transmission, a link adaptation target (e.g. MCS) or other.

In a scenario, the TX UE may determine that a number of RX UEs of the group of UEs without SL CA capability on the group of carriers is above a threshold number of UEs. For example, the TX UE may receive an ACK transmission or a NACK transmission on only one carrier of the group of carriers from these RX UEs of the group of UEs without SL CA capability. The TX UE may receive a DTX transmission for other carriers of the group of carriers from these RX UEs of the group of UEs without SL CA capability. The threshold number of UEs may be one or more than one. In this scenario, the TX UE may perform one or more of the following operations:
(a)The TX UE may abstain from using SL CA on the group of carriers for sending a subsequent SL transmission to each RX UE of the group of UEs.
(b)The TX UE may use SL CA on the group of carriers for sending a subsequent SL transmission to each RX UE of the group of UEs. The subsequent SL transmission may comprise a duplicate SL transmission. The subsequent SL transmission may not comprise a split SL transmission (i.e. no bandwidth extension). In this way, increased reliability may be achieved for the RX UEs of the group of UEs with SL CA capability.
(c)The TX UE may send a duplicate SL transmission to each RX UE of the group user UEs on each carrier of a different group of carriers (i.e. a group of carriers different from the group of carriers where a number of RX UEs of the group of UEs is without SL CA capability).

In another scenario, the TX UE may determine that a number of RX UEs of the group of UEs with SL CA capability on the group of carriers is above a threshold number of UEs. The threshold number of UEs may be one or more than one. In this scenario, the TX UE may perform the following operation.

The TX UE may use SL CA on the group of carriers for sending a subsequent SL transmission to each RX UE of the group of UEs. The subsequent SL transmission may comprise a split SL transmission for data flows of a same service. For example the service may comprise adaptive bit streaming. A data flow for low bitrate/basic stream may be sent in one carrier (e.g. primary carrier) and a data flow for higher bitrate stream may be sent in another carrier. In this way, the user experience of the service for the Rx UEs with SL CA capability on the group of carriers may be improved.

In another scenario, the TX UE may determine that all RX UEs of the group of UE have a SL CA capability on the group of carriers. In this scenario, the TX UE may perform the following operation.

The TX UE may use SL CA on the group of carriers for sending a subsequent SL transmission to each RX UE of the group of UEs. The subsequent SL transmission may comprise a duplicate SL transmission and/or a split SL transmission. The duplicate SL transmission may comprise a simultaneous SL transmission on the group of carriers or a sequential SL transmission on the group of carriers, for example depending on whether the SL transmission is duplicated in simultaneous slots or sequential slots.

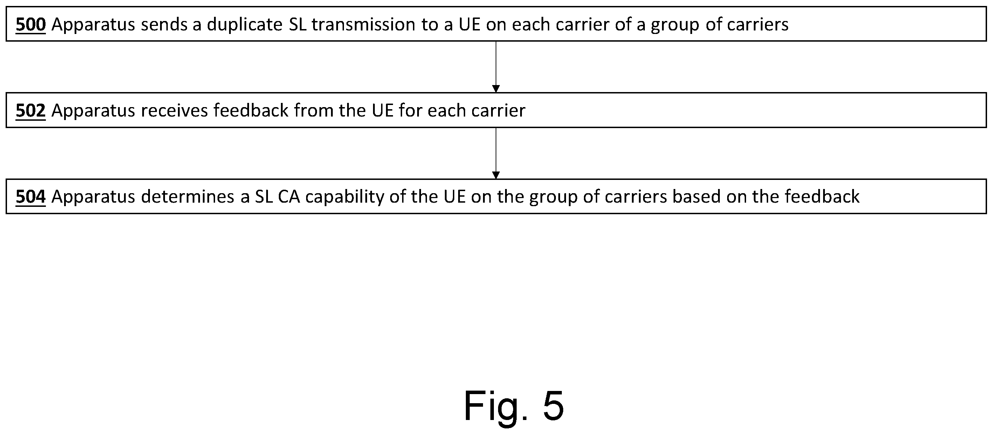

Figure 5 shows a block diagram of a method (falling within the scope of the claims) for determining a CA capability of a UE on a group of carriers. The method may be performed by an apparatus. The apparatus may be a TX UE. The UE may be a RX UE.

In step 500, the apparatus may send a duplicate SL transmission to a UE on each carrier of a group of carriers.

In step 502, the apparatus may receive feedback from the UE for each carrier.

In step 504, the apparatus may determine a SL CA capability of the UE on the group of carriers based on the feedback.

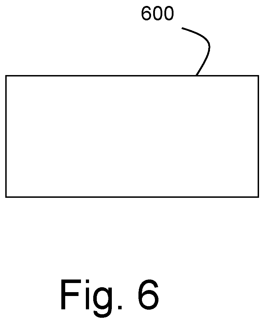

Figure 6 shows a schematic representation of non-volatile memory media 600 storing instructions and/or parameters which when executed by a processor allow the processor to perform one or more of the steps of the method of Figure 5.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figure 5, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising:
means for sending (500) a duplicate sidelink transmission to a user equipment on each carrier of a group of carriers;
means for receiving (502) feedback from the user equipment for each carrier of the group of carriers; and
means for determining (504) a sidelink carrier aggregation capability of the user equipment on the group of carriers based on the feedback.

2. The apparatus of claim 1, comprising:
means for sending (500) a duplicate sidelink transmission to a group of user equipment on each carrier of a group of carriers;
means for receiving (502) feedback from each user equipment of the group of user equipment for each carrier of the group of carriers; and
means for determining (504) a sidelink carrier aggregation capability of each user equipment of the group of user equipment on the group of carriers based on the feedback.

3. The apparatus of claim 1 or claim 2, wherein the feedback from the user equipment or each user equipment of the group of user equipment for each carrier of the group of carriers comprises:
an acknowledgement transmission when the user equipment successfully decodes a sidelink control information and successfully decodes a data payload on the carrier;
a negative acknowledgement transmission when the user equipment successfully decodes a sidelink control information and does not successfully decode a data payload on the carrier; or
a discontinuous transmission when the user equipment does not successfully decode the sidelink control information on the carrier.

4. The apparatus of claim 3, wherein the apparatus comprises:
means for determining (504) that a user equipment of the group of user equipment has a sidelink carrier aggregation capability on the group of carriers when the feedback for each carrier comprises an acknowledgement transmission or a negative acknowledgement transmission; or
means for determining (504) that a user equipment of the group of user equipment does not have a sidelink carrier aggregation capability on the group of carriers, when the feedback for at least one carrier comprises a discontinuous transmission.

5. The apparatus of any of claims 2 to 4, wherein sending (500) a duplicate sidelink transmission to each user equipment of the group of user equipment on each carrier of a group of carriers is in response to at least one of:
removing and/or adding a user equipment to the group of user equipment;
removing and/or adding a carrier to the group of carriers;
detecting a number of consecutive discontinuous transmissions from a user equipment of the group of user equipment on a carrier of the group of carriers being greater than a threshold number of consecutive discontinuous transmissions; and/or
detecting an expiration of a timer.

6. The apparatus of claim 5, wherein the threshold number of consecutive discontinuous transmissions is based on at least one of:
a transmission power of the duplicate sidelink transmission;
a range of sidelink transmission;
a link adaptation target; and/or
a modulation and coding scheme.

7. The apparatus of any of claims 2 to 6, wherein the duplicate sidelink transmission comprises:
sidelink carrier aggregation capability detection information; and/or data payload.

8. The apparatus of claim 7, wherein the sidelink carrier aggregation capability detection information comprises:
an indication of a list of the group of carriers;
an indication of a primary carrier within the group of carriers; and/or an indication of a secondary carrier within the group of carriers.

9. The apparatus of claim 7 or claim 8, wherein the sidelink carrier aggregation capability detection information is conveyed within sidelink control information and/or within a medium access control control element.

10. The apparatus of any of claims 2 to 9, wherein sending (500) a duplicated sidelink transmission to each user equipment of the group of user equipment on each carrier of the group of carriers comprises:
simultaneously sending a duplicate sidelink transmission to each user equipment of the group of user equipment on a carrier of the group of carriers and sending a duplicate sidelink transmission to each user equipment of the group of user equipment on another carrier of the group of carriers; or
sequentially sending a duplicate sidelink transmission to each user equipment of the group of user equipment on a carrier of the group of carriers and sending a duplicate sidelink transmission to each user equipment of the group of user equipment on another carrier of the group of carriers.

11. The apparatus of any of claims 2 to 10, wherein the apparatus comprises:
means for determining (504) that a number of user equipment of the group of user equipment without sidelink carrier aggregation capability on the group of carriers is above a threshold number of user equipment.

12. The apparatus of claim 11, wherein the apparatus comprises at least one of:
means for abstaining from using sidelink carrier aggregation on the group of carriers for sending a subsequent sidelink transmission to the group of user equipment;
means for using sidelink carrier aggregation on the group of carriers for sending a subsequent sidelink transmission to the group of user equipment, wherein the subsequent sidelink transmission comprises a duplicate sidelink transmission; and/or
means for resending a duplicate sidelink transmission to the group user equipment on each carrier of a different group of carriers.

13. The apparatus of any of claims 2 to 10, wherein the apparatus comprises:
means for determining (504) that all user equipment of the group of user equipment have a sidelink carrier aggregation capability on the group of carriers; and means for using sidelink carrier aggregation on the group of carriers for sending a subsequent sidelink transmission to the group of user equipment.

14. The apparatus of any of claims 1 to 13, wherein the apparatus comprises a user equipment.

15. A method comprising:
sending (500) a duplicate sidelink transmission to a user equipment on each carrier of a group of carriers;
receiving (502) feedback from the user equipment for each carrier of the group of carriers; and
determining (504) a sidelink carrier aggregation capability of the user equipment on the group of carriers based on the feedback.

## Patentansprüche

1. Vorrichtung, die Folgendes umfasst:
Mittel zum Senden (500) einer doppelten Sidelinkübertragung an eine Teilnehmereinrichtung auf jedem Träger einer Gruppe von Trägern;
Mittel zum Empfangen (502) einer Rückmeldung von der Teilnehmereinrichtung für jeden Träger der Gruppe von Trägern; und
Mittel zum Bestimmen (504) einer Sidelinkträgeraggregationsfähigkeit der Teilnehmereinrichtung auf der Gruppe von Trägern auf Basis der Rückmeldung.

2. Vorrichtung nach Anspruch 1, die Folgendes umfasst:
Mittel zum Senden (500) einer doppelten Sidelinkübertragung an eine Gruppe von Teilnehmereinrichtungen auf jedem Träger einer Gruppe von Trägern;
Mittel zum Empfangen (502) einer Rückmeldung von jeder Teilnehmereinrichtung der Gruppe von Teilnehmereinrichtungen für jeden Träger der Gruppe von Trägern; und
Mittel zum Bestimmen (504) einer Sidelinkträgeraggregationsfähigkeit jeder Teilnehmereinrichtung der Gruppe von Teilnehmereinrichtungen in der Gruppe von Trägern auf Basis der Rückmeldung.

3. Vorrichtung nach Anspruch 1 oder Anspruch 2, wobei die Rückmeldung von der Teilnehmereinrichtung oder von jeder Teilnehmereinrichtung der Gruppe von Teilnehmereinrichtungen für jeden Träger der Gruppe von Trägern Folgendes umfasst:
eine Bestätigungsübertragung, wenn die Teilnehmereinrichtung Sidelinksteuerinformationen erfolgreich decodiert und eine Datennutzlast auf dem Träger erfolgreich decodiert;
eine Negativbestätigungsübertragung, wenn die Teilnehmereinrichtung Sidelinksteuerinformationen erfolgreich decodiert und eine Datennutzlast auf dem Träger nicht erfolgreich decodiert; oder
eine diskontinuierliche Übertragung, wenn die Teilnehmereinrichtung die Sidelinksteuerinformationen auf dem Träger nicht erfolgreich decodiert.

4. Vorrichtung nach Anspruch 3, wobei die Vorrichtung Folgendes umfasst:
Mittel zum Bestimmen (504), dass eine Teilnehmereinrichtung der Gruppe von Teilnehmereinrichtungen eine Sidelinkträgeraggregationsfähigkeit auf der Gruppe von Trägern aufweist, wenn die Rückmeldung für jeden Träger eine Bestätigungsübertragung oder eine Negativbestätigungsübertragung umfasst; oder
Mittel zum Bestimmen (504), dass eine Teilnehmereinrichtung der Gruppe von Teilnehmereinrichtungen keine Sidelinkträgeraggregationsfähigkeit auf der Gruppe von Trägern aufweist, wenn die Rückmeldung für mindestens einen Träger eine diskontinuierliche Übertragung umfasst.

5. Vorrichtung nach einem der Ansprüche 2 bis 4, wobei das Senden (500) einer doppelten Sidelinkübertragung an jede Teilnehmereinrichtung der Gruppe von Teilnehmereinrichtungen auf jedem Träger einer Gruppe von Trägern in Reaktion auf mindestens eines von Folgendem erfolgt:
Entfernen einer Teilnehmereinrichtung aus der Gruppe von Teilnehmereinrichtungen und/oder Hinzufügen einer solchen aus derselben;
Entfernen eines Trägers aus der Gruppe von Trägern und/oder Hinzufügen eines solchen zu derselben;
Detektieren, dass eine Anzahl von aufeinanderfolgenden diskontinuierlichen Übertragungen von einer Teilnehmereinrichtung der Gruppe von Teilnehmereinrichtungen auf einem Träger der Gruppe von Trägern größer ist als eine Schwellwertanzahl von aufeinanderfolgenden diskontinuierlichen Übertragungen; und/oder
Detektieren eines Ablaufs eines Timers.

6. Vorrichtung nach Anspruch 5, wobei die Schwellwertanzahl von aufeinanderfolgenden diskontinuierlichen Übertragungen auf mindestens einem von Folgendem basiert:
einer Übertragungsleistung der doppelten Sidelinkübertragung;
einem Bereich einer Sidelinkübertragung;
einem Verbindungsanpassungsziel; und/oder
einem Modulations- und Codierschema.

7. Vorrichtung nach einem der Ansprüche 2 bis 6, wobei die doppelte Sidelinkübertragung Folgendes umfasst:
Detektionsinformationen zur Sidelinkträgeraggregationsfähigkeit; und/oder
Datennutzlast.

8. Vorrichtung nach Anspruch 7, wobei die Detektionsinformationen zur Sidelinkträgeraggregationsfähigkeit Folgendes umfassen:
eine Anzeige einer Liste der Gruppe von Trägern;
eine Anzeige eines primären Trägers in der Gruppe von Trägern; und/oder
eine Anzeige eines sekundären Trägers in der Gruppe von Trägern.

9. Vorrichtung nach Anspruch 7 oder Anspruch 8, wobei die Detektionsinformationen zur Sidelinkträgeraggregationsfähigkeit mit Sidelinksteuerinformationen und/oder mit einem Medienzugangssteuerungssteuerelement übermittelt werden.

10. Vorrichtung nach einem der Ansprüche 2 bis 9, wobei das Senden (500) einer duplizierten Sidelinkübertragung an jede Teilnehmereinrichtung der Gruppe von Teilnehmereinrichtungen auf jedem Träger einer Gruppe von Trägern Folgendes umfasst:
gleichzeitiges Senden einer doppelten Sidelinkübertragung an jede Teilnehmereinrichtung der Gruppe von Teilnehmereinrichtungen auf einem Träger der Gruppe von Trägern und Senden einer doppelten Sidelinkübertragung an jede Teilnehmereinrichtung der Gruppe von Teilnehmereinrichtungen auf einem anderen Träger der Gruppe von Trägern; oder
sequenzielles Senden einer doppelten Sidelinkübertragung an jede Teilnehmereinrichtung der Gruppe von Teilnehmereinrichtungen auf einem Träger der Gruppe von Trägern und Senden einer doppelten Sidelinkübertragung an jede Teilnehmereinrichtung der Gruppe von Teilnehmereinrichtungen auf einem anderen Träger der Gruppe von Trägern.

11. Vorrichtung nach einem der Ansprüche 2 bis 10, wobei die Vorrichtung Folgendes umfasst:
Mittel zum Bestimmen (504), dass eine Anzahl von Teilnehmereinrichtungen der Gruppe von Teilnehmereinrichtungen ohne eine Sidelinkträgeraggregationsfähigkeit in der Gruppe von Trägern über eine Schwellwertanzahl von Teilnehmereinrichtungen liegt.

12. Vorrichtung nach Anspruch 11, wobei die Vorrichtung mindestens eines von Folgendem umfasst:
Mittel zum Unterlassen des Verwendens einer Sidelinkträgeraggregation in der Gruppe von Trägern zum Senden einer nachfolgenden Sidelinkübertragung an die Gruppe von Teilnehmereinrichtungen;
Mittel zum Verwenden einer Sidelinkträgeraggregation in der Gruppe von Trägern zum Senden einer nachfolgenden Sidelinkübertragung an die Gruppe von Teilnehmereinrichtungen, wobei die nachfolgende Sidelinkübertragung eine doppelte Sidelinkübertragung umfasst; und/oder
Mittel zum erneuten Senden einer doppelten Sidelinkübertragung an die Gruppe von Teilnehmereinrichtungen auf jedem Träger einer anderen Gruppe von Trägern.

13. Vorrichtung nach einem der Ansprüche 2 bis 10, wobei die Vorrichtung Folgendes umfasst:
Mittel zum Bestimmen (504), dass alle Teilnehmereinrichtungen der Gruppe von Teilnehmereinrichtungen eine Sidelinkträgeraggregationsfähigkeit in der Gruppe von Trägern aufweisen; und
Mittel zum Verwenden einer Sidelinkträgeraggregation in der Gruppe von Trägern zum Senden einer nachfolgenden Sidelinkübertragung an die Gruppe von Teilnehmereinrichtungen.

14. Vorrichtung nach einem der Ansprüche 1 bis 13, wobei die Vorrichtung eine Teilnehmereinrichtung umfasst.

15. Verfahren, das Folgendes umfasst:
Senden (500) einer doppelten Sidelinkübertragung an eine Teilnehmereinrichtung auf jedem Träger einer Gruppe von Trägern;
Empfangen (502) einer Rückmeldung von der Teilnehmereinrichtung für jeden Träger der Gruppe von Trägern; und
Bestimmen (504) einer Sidelinkträgeraggregationsfähigkeit der Teilnehmereinrichtung auf der Gruppe von Trägern auf Basis der Rückmeldung.

## Revendications

1. Appareil comprenant :
des moyens pour envoyer (500) une transmission de liaison latérale dupliquée à un équipement utilisateur sur chaque porteuse d'un groupe de porteuses ;
des moyens pour recevoir (502) une rétroaction de l'équipement utilisateur pour chaque porteuse du groupe de porteuses ; et
des moyens pour déterminer (504) une capacité d'agrégation de porteuses de liaison latérale de l'équipement utilisateur sur le groupe de porteuses sur la base de la rétroaction.

2. Appareil selon la revendication 1, comprenant :
des moyens pour envoyer (500) une transmission de liaison latérale dupliquée à un groupe d'équipements utilisateurs sur chaque porteuse d'un groupe de porteuses ;
des moyens pour recevoir (502) une rétroaction de chaque équipement utilisateur du groupe d'équipements utilisateurs pour chaque porteuse du groupe de porteuses ; et
des moyens pour déterminer (504) une capacité d'agrégation de porteuses de liaison latérale de chaque équipement utilisateur du groupe d'équipements utilisateurs sur le groupe de porteuses sur la base de la rétroaction.

3. Appareil selon la revendication 1 ou la revendication 2, dans lequel la rétroaction de l'équipement utilisateur ou de chaque équipement utilisateur du groupe d'équipements utilisateurs pour chaque porteuse du groupe de porteuses comprend :
une transmission d'accusé de réception lorsque l'équipement utilisateur décode avec succès des informations de contrôle de liaison latérale et qu'il décode avec succès une charge utile de données sur la porteuse ;
une transmission d'accusé de réception négatif lorsque l'équipement utilisateur décode avec succès des informations de contrôle de liaison latérale et qu'il ne décode pas avec succès une charge utile de données sur la porteuse ; ou
une transmission discontinue lorsque l'équipement utilisateur ne décode pas avec succès les informations de contrôle de liaison latérale sur la porteuse.

4. Appareil selon la revendication 3, dans lequel l'appareil comprend :
des moyens pour déterminer (504) qu'un équipement utilisateur du groupe d'équipements utilisateurs dispose d'une capacité d'agrégation de porteuses de liaison latérale sur le groupe de porteuses lorsque la rétroaction pour chaque porteuse comprend une transmission d'accusé de réception ou une transmission d'accusé de réception négatif ; ou
des moyens pour déterminer (504) qu'un équipement utilisateur du groupe d'équipements utilisateurs ne dispose pas d'une capacité d'agrégation de porteuses de liaison latérale sur le groupe de porteuses, lorsque la rétroaction pour au moins une porteuse comprend une transmission discontinue.

5. Appareil selon l'une des revendications 2 à 4, dans lequel l'envoi (500) d'une transmission de liaison latérale dupliquée à chaque équipement utilisateur du groupe d'équipements utilisateurs sur chaque porteuse d'un groupe de porteuses se fait en réponse à au moins l'une des opérations suivantes :
supprimer un équipement utilisateur du groupe d'équipements utilisateurs et/ou l'ajouter à celui-ci ;
supprimer une porteuse au groupe de porteuses et/ou l'ajouter à celui-ci ;
détecter un nombre de transmissions discontinues consécutives en provenance d'un équipement utilisateur du groupe d'équipements utilisateurs sur une porteuse du groupe de porteuses qui est supérieur à un nombre seuil de transmissions discontinues consécutives ; et/ou
détecter l'expiration d'un temporisateur.

6. Appareil selon la revendication 5, dans lequel le nombre seuil de transmissions discontinues consécutives est basé sur au moins l'un parmi :
une puissance de transmission de la transmission de liaison latérale dupliquée ;
une portée de la transmission de liaison latérale ;
une cible d'adaptation de liaison ; et/ou
un schéma de modulation et de codage.

7. Appareil selon l'une des revendications 2 à 6, dans lequel la transmission de liaison latérale dupliquée comprend :
des informations de détection de capacité d'agrégation de porteuses de liaison latérale ; et/ou
une charge utile de données.

8. Appareil selon la revendication 7, dans lequel les informations de détection de capacité d'agrégation de porteuses de liaison latérale comprennent :
une indication d'une liste du groupe de porteuses ;
une indication d'une porteuse primaire au sein du groupe de porteuses ; et/ou
une indication d'une porteuse secondaire au sein du groupe de porteuses.

9. Appareil selon la revendication 7 ou la revendication 8, dans lequel les informations de détection de capacité d'agrégation de porteuses de liaison latérale sont transportées dans les informations de contrôle de liaison latérale et/ou dans un élément de contrôle de contrôle d'accès au support.

10. Appareil selon l'une des revendications 2 à 9, dans lequel l'envoi (500) d'une transmission de liaison latérale dupliquée à chaque équipement utilisateur du groupe d'équipements utilisateurs sur chaque porteuse du groupe de porteuses comprend
l'envoi simultané d'une transmission de liaison latérale dupliquée à chaque équipement utilisateur du groupe d'équipements utilisateurs sur une porteuse du groupe de porteuses et l'envoi d'une transmission de liaison latérale dupliquée à chaque équipement utilisateur du groupe d'équipements utilisateurs sur une autre porteuse du groupe de porteuses ; ou
l'envoi séquentiel d'une transmission de liaison latérale dupliquée à chaque équipement utilisateur du groupe d'équipements utilisateurs sur une porteuse du groupe de porteuses et l'envoi d'une transmission de liaison latérale dupliquée à chaque équipement utilisateur du groupe d'équipements utilisateurs sur une autre porteuse du groupe de porteuses.

11. Appareil selon l'une des revendications 2 à 10, dans lequel l'appareil comprend :
des moyens pour déterminer (504) qu'un nombre d'équipements utilisateurs du groupe d'équipements utilisateurs sans capacité d'agrégation de porteuses de liaison latérale sur le groupe de porteuses est supérieur à un nombre seuil d'équipements utilisateurs.

12. Appareil selon la revendication 11, dans lequel l'appareil comprend au moins l'un parmi :
des moyens pour s'abstenir d'utiliser une agrégation de porteuses de liaison latérale sur le groupe de porteuses pour envoyer une transmission de liaison latérale ultérieure au groupe d'équipements utilisateurs ;
des moyens pour utiliser une agrégation de porteuses de liaison latérale sur le groupe de porteuses pour envoyer une transmission de liaison latérale ultérieure au groupe d'équipements utilisateurs, dans lequel la transmission de liaison latérale ultérieure comprend une transmission de liaison latérale dupliquée ; et/ou
des moyens pour envoyer de nouveau une transmission de liaison latérale dupliquée à l'équipement utilisateur de groupe sur chaque porteuse d'un groupe de porteuses différent.

13. Appareil selon l'une des revendications 2 à 10, dans lequel l'appareil comprend :
des moyens pour déterminer (504) que tous les équipements utilisateurs du groupe d'équipements utilisateurs disposent d'une capacité d'agrégation de porteuses de liaison latérale sur le groupe de porteuses ; et
des moyens pour utiliser une agrégation de porteuses de liaison latérale sur le groupe de porteuses pour envoyer une transmission de liaison latérale ultérieure au groupe d'équipements utilisateurs.

14. Appareil selon l'une des revendications 1 à 13, dans lequel l'appareil comprend un équipement utilisateur.

15. Procédé comprenant les étapes suivantes :
envoyer (500) une transmission de liaison latérale dupliquée à un équipement utilisateur sur chaque porteuse d'un groupe de porteuses ;
recevoir (502) une rétroaction de l'équipement utilisateur pour chaque porteuse du groupe de porteuses ; et
déterminer (504) une capacité d'agrégation de porteuses de liaison latérale de l'équipement utilisateur sur le groupe de porteuses sur la base de la rétroaction.
